# EUROPEAN PATENT APPLICATION

(11) **EP 4 528 450 A1**
(43) Date of publication of application: **26.03.2025**
(21) Application number: 23806743.3
(22) Date of filing: 06.05.2023
(51) Int. Cl.: G06F 3/04817

(54) **CHAT CHANNEL DISPLAY METHOD AND APPARATUS, DEVICE, READABLE STORAGE MEDIUM, AND PRODUCT**

(30) Priority: 17.05.2022 CN 202210542375
(71) Applicant: Beijing Zitiao Network Technology Co., Ltd., Beijing 100190 (CN)
(72) Inventor: WANG, Xiao, Beijing 100028 (CN); LI, Yijie, Beijing 100028 (CN)
(74) Representative: Dentons UK and Middle East LLP
(86) International application number: PCT/CN2023/092561
(87) International publication number: WO 2023/221791

(57) **Abstract**

Embodiments of the present invention provide a chat channel display method and apparatus, an electronic device, a computer-readable storage medium, a computer program product, and a computer program. The method comprises: displaying an interface of a livestreaming room; and under the condition that a personalized chat channel corresponding to the livestreaming room exists, displaying, on the interface of the livestreaming room, first chat content corresponding to the personalized chat channel.

## Description

### CROSS-REFERENCE TO RELATED APPLICATIONS

The present disclosure claims priority to China Patent Application No. 202210542375.5, filed on May 17, 2022 and entitled "CHAT CHANNEL DISPLAY METHOD AND APPARATUS, DEVICE, READABLE STORAGE MEDIUM, AND PRODUCT", which is incorporated herein by reference in its entirety.

### TECHNICAL FIELD

Embodiments of the present disclosure relate to the technical field of interface interaction, and in particular, to a method and apparatus for chat channel display, an electronic device, a computer-readable storage medium, a computer program product and a computer program.

### BACKGROUND

In the related art, chat functions of a live streaming room are monotonous, and cannot satisfy diverse requirements of users, resulting in a poor user experience.

### SUMMARY

Embodiments of the present disclosure provide a method and apparatus for chat channel display, an electronic device, a computer-readable storage medium, a computer program product and a computer program, which are used for at least partially solving the above technical problems in the related art.

In the first aspect, an embodiment of the present disclosure provides a method for chat channel display. The method includes: displaying a live streaming room interface; and in response to a customized chat channel corresponding to a live streaming room existing, displaying the first chat content corresponding to the customized chat channel on the live streaming room interface.

In the second aspect, an embodiment of the present disclosure provides an apparatus for chat channel display. The apparatus includes a displaying module and a processing module.

The displaying module is configured to display a live streaming room interface.

The processing module is configured to, in response to a customized chat channel corresponding to a live streaming room existing, display the first chat content corresponding to the customized chat channel on the live streaming room interface.

In the third aspect, an embodiment of the present disclosure provides an electronic device. The electronic device includes a processor and a memory. The memory stores computer-executable instructions; and the processor executes the computer-executable instructions stored in the memory, causing the at least one processor to execute the method for chat channel display according to the first aspect and various possible designs of the first aspect.

In the fourth aspect, an embodiment of the present disclosure provides a computer-readable storage medium. The computer-readable storage medium stores computer-executable instructions, and when the computer-executable instructions are executed by a processor, the processor is caused to implement the method for chat channel display according to the first aspect and various possible designs of the first aspect.

In the fifth aspect, an embodiment of the present disclosure provides a computer program product, where the computer program product includes a computer program, and when the computer program is executed by a processor, the processor is caused to implement the method for chat channel display according to the first aspect and various possible designs of the first aspect.

In the sixth aspect, an embodiment of the present disclosure provides a computer program. When the computer program is executed by a processor, the processor is caused to implement the method for chat channel display according to the first aspect and various possible designs of the first.

According to the method and apparatus for chat channel display, the electronic device, the computer-readable storage medium, the computer program product and the computer program provided in the embodiments, when it is determined that there is a customized chat channel corresponding to a live streaming room interface, the first chat content corresponding to the customized chat channel is displayed on the live streaming room interface.

### BRIEF DESCRIPTION OF DRAWINGS

In order to more clearly describe the technical solutions in the embodiments of the present disclosure or in the related art, the accompanying drawings for describing the embodiments or the related art will be briefly described below. Apparently, the accompanying drawings in the description below show the embodiments of the present disclosure, and those of ordinary skill in the art may still derive other accompanying drawings from these accompanying drawings without creative efforts.
Fig. 1 is a schematic flowchart of a method for chat channel display provided in an embodiment of the present disclosure;
Fig. 2 is a schematic diagram of a live streaming room interface provided in an embodiment of the present disclosure;
Fig. 3 is a schematic diagram of another live streaming room interface provided in an embodiment of the present disclosure;
Fig. 4 is a schematic diagram of interface interaction provided in an embodiment of the present disclosure;
Fig. 5 is another schematic diagram of interface interaction provided in an embodiment of the present disclosure;
Fig. 6 is another schematic diagram of interface interaction provided in an embodiment of the present disclosure;
Fig. 7 is another schematic diagram of interface interaction provided in an embodiment of the present disclosure;
Fig. 8 is another schematic diagram of interface interaction provided in an embodiment of the present disclosure;
Fig. 9 is a structural schematic diagram of an apparatus for chat channel display provided in an embodiment of the present disclosure; and
Fig. 10 is a structural schematic diagram of an electronic device provided in an embodiment of the present disclosure.

### DETAILED DESCRIPTION

In order to make the objects, technical solutions and advantages of embodiments of the present disclosure clearer, the technical solutions in the embodiments of the present disclosure will be described clearly and completely below with reference to the accompanying drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

In view of the above-mentioned technical problem of a single interaction mode and display mode in a method of displaying a live streaming room chat interface, the present disclosure provides a method and apparatus for chat channel display, an electronic device, a computer-readable storage medium, a computer program product and a computer program.

It should be noted that the method and apparatus for chat channel display, the electronic device, the computer-readable storage medium, the computer program product and the computer program provided in the present disclosure can be applied to any scenario where the chat content is displayed in a live streaming room interface.

In the related art, a live streaming room interface usually displays a public chat in a preset display area. However, when a user wants to have a chat with another user, they can only have their chat content displayed in a display area for the public chat, or they need to jump to another page for a chat, which makes the interaction operation complex and the interaction path long, often leading to a poor user experience.

In the process of solving the above technical problem, the inventors have found through research that to improve the diversity of the chat functions of the live streaming room and improve the user experience, the user may be allowed to establish a customized chat channel according to actual requirements. In the customized chat channel, the user can add members to participate in the chat by themselves, and the chat content corresponding to the customized chat channel can be distinguished from the chat content of the public chat.

Further, the inventors have found through research that in a live streaming room interface, when there is currently a customized chat channel corresponding to the live streaming room interface, the first chat content corresponding to the customized chat channel may be displayed on the live streaming room interface. Therefore, the user can have a chat with the other user directly on the live streaming room interface without the need to make an interface jump. In addition, the first chat content is displayed, so that the first chat content can be distinguished from the chat content in the public chat channel and is invisible to users in a non-customized chat channel in the live streaming room, thereby making it possible to meet requirements of users.

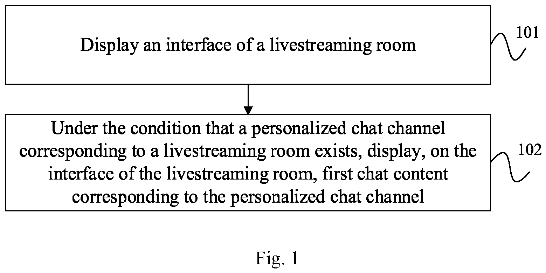

Fig. 1 is a schematic flowchart of a method for chat channel display provided in an embodiment of the present disclosure. As shown in Fig. 1, the method includes the following steps.

Step 101: displaying a live streaming room interface.

In this embodiment, an execution body is an apparatus for chat channel display. The apparatus for chat channel display may be coupled to a terminal device, so that a display operation for the live streaming room interface can be performed in response to a trigger operation of a user.

In this embodiment, to enrich the functions of application software at present, a variety of application software provide a live streaming function for users. The users may choose, according to their requirements, a preferred live streamer or a preferred live streaming room to watch the live streaming content. For example, the live streaming room interface may be displayed in a display interface when a target object (such as the first user) is watching the live streaming content. The live streaming content, identifier information of a live streamer corresponding to the live streaming room, etc. may be displayed on the live streaming room interface.

Step 102: in response to a customized chat channel corresponding to a live streaming room existing, displaying the first chat content corresponding to the customized chat channel on the live streaming room interface.

In this embodiment, a live streaming room interface generally includes only a public chat channel in the related art, where the public chat channel may be a chat channel that users in the live streaming room may participate in. The chat content in the public chat channel may be displayed in a public screen area, chat information among all users in the live streaming room may be displayed in the public screen area, and the displayed chat content is visible to all the users in the live streaming room. However, when the target object (such as the first user) is watch live streaming content on the live streaming room interface, in response to being intended to have a private chat with another object (such as the second user) in the live streaming room, the target object usually needs to exit the live streaming room interface and jumps to another social interface or social application for the private chat, which results in a poor experience.

In order to solve the above problem, a customized chat channel (also referred to as a custom chat channel) may be created or added on the live streaming room interface. The customized chat channel may specifically be created by the first user by themselves according to the actual requirements, or may be created by another user that is joined by the first user. For example, according to current actual requirements, the first user may select the second user whom the first user wish to have a chat with, to join the customized chat channel, so as to have a private chat in the customized chat channel; or a user may adjust display information in the customized chat channel according to their personal preferences, so that the display effect of the customized chat channel is more in line with requirements of the user.

Further, when a customized chat channel corresponding to the live streaming room interface exists, the first chat content corresponding to the customized chat channel may be displayed on the live streaming room interface. Therefore, the user can have a chat in the customized chat channel to form the first chat content. The first chat content is invisible to users in the live streaming room other than members in the customized chat channel.

There may be at least one customized chat channel. The user may create at least one customized chat channel by themselves, or may join at least one customized chat channel created by another second user, which is not limited in the present disclosure. In addition, the customized chat channel may include two channel members, or may include more than three channel members.

Optionally, the display area for the first chat content corresponding to the customized chat channel may further include a list identifier of members participating in the customized chat channel. The target object (such as the first user) may expand and view a list of the members participating in the customized chat channel by triggering the list identifier.

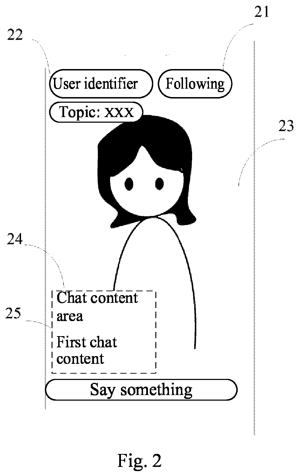

Fig. 2 is a schematic diagram of a live streaming room interface provided in an embodiment of the present disclosure. As shown in Fig. 2, a live streaming room interface 21 includes live streaming content 22, an identifier 23 of a target live streamer and a preset chat content area 24. The first chat content 25 corresponding to the customized chat channel is displayed in the chat content area 24.

Optionally, a user may customize a display position, a display dimension and display parameters of the customized chat channel according to requirements, where the display parameters may include a font, a character size, a character color, etc.

In a possible design, the display effect of the first chat content corresponding to the customized chat channel may be different from the display effect of the second chat content corresponding to the public chat channel.

In a possible design, a size of the display area for the first chat content corresponding to the customized chat channel is adjusted.

In a possible design, when there is an image and/or long text in the first chat content, a display size of the customized chat channel area may be adaptively adjusted according to an image size, in order to enable complete display of the image and/or the long text.

The first chat content is displayed in the first chat window corresponding to the customized chat channel. When the display size of the first chat window is less than a preset size, the display size of the first chat window is adjusted in response to a size adjustment operation for the first chat window.

When the size is greater than or equal to the preset size, a sliding assembly is displayed at a preset position of the chat window, and the chat content displayed in the first chat window is adjusted in response to a trigger operation for the sliding assembly.

In a possible design, a user may perform screen clearing on the live streaming room interface according to actual requirements, so that only the live streaming content is currently displayed on the live streaming room interface, thereby improving the experience of watching a live stream. Therefore, the display of the customized chat channel may be stopped in response to the screen clearing operation. When the screen clearing operation is stopped, the display of the first chat content may be restored.

In a possible design, in response to a detection instruction triggered by a user, or according to a preset detection cycle, a key element corresponding to current live streaming content is detected, where the key element includes a body part of a live streamer, a text part, etc., and the display position of the customized chat channel is adjusted according to a position of the key element. To further improve the experience of watching a live stream, a key part of the live streaming content may be detected automatically. For example, the key part may be the head of the live streamer, a key text part, etc. The position of the customized chat channel may be adaptively adjusted to avoid covering the key part. The display position of the customized chat channel is adjusted according to the position of the key element, so as to ensure that the displayed customized chat channel will not cover the key element in the current live streaming room, thereby optimizing the experience of watching a live stream on the basis of enriching the display effect of the live streaming room interface.

In a possible design, to facilitate an input operation of a user in a chat channel, an input box is fixed at the bottom end and does not move with a change in the position of the first chat content corresponding to the customized chat channel.

In a possible design, chat content corresponding to the public chat channel and the first chat content corresponding to the customized chat channel may be displayed in the public screen area at the same time, and the first chat content may be identified. The chat content corresponding to the public chat channel is visible to all users, and the first chat content is visible to the users in the customized chat channel.

According to the method for chat channel display provided in this embodiment, when it is determined that there is a customized chat channel corresponding to the live streaming room interface, the first chat content corresponding to the customized chat channel is displayed on the live streaming room interface. Therefore, the chat content corresponding to the customized chat channel that is customized by the user according to the actual requirements can be displayed on the live streaming room interface, the chat content displayed on the live streaming room interface is more diverse, and can satisfy the requirements of users, thereby improving the user experience.

Further, on the basis of Embodiment 1, the step 102 includes: when the customized chat channel corresponding to the live streaming room exists, in response to a display instruction for the first chat content corresponding to the customized chat channel, displaying the first chat content corresponding to the customized chat channel on the live streaming room interface.

In this embodiment, the first chat content corresponding to the customized chat channel may specifically be displayed according to a trigger operation of the user. Specifically, the user may trigger the display instruction for the first chat content corresponding to the customized chat channel according to actual requirements. The display instruction may be triggered by triggering a preset display icon. For example, a customized chat channel display control is provided on the live streaming room interface, and when a trigger operation for the customized chat channel display control is received, the first chat content corresponding to the customized chat channel may be displayed. Alternatively, the display instruction may be generated by the user triggering a display interface through a preset gesture. Alternatively, the display instruction may be generated in response to the user triggering a channel identifier in a chat channel list. This is not limited in the present disclosure.

When the customized chat channel corresponding to the live streaming room exists, in response to the user's display instruction for the first chat content corresponding to the customized chat channel, the first chat content corresponding to the customized chat channel may be displayed on the live streaming room interface. Therefore, the user can have a chat in the customized chat channel to form the first chat content.

In addition, in response to entering the live streaming room and when it is determined that there is a customized chat channel corresponding to the live streaming room, the first chat content corresponding to the customized chat channel may be directly displayed on the live streaming room interface, or in response to completing the creation of the customized chat channel in the live streaming room, the first chat content corresponding to the customized chat channel may be displayed on the live streaming room interface.

Further, on the basis of Embodiment 1, the step 101 includes: displaying the live streaming room interface, and displaying the second chat content corresponding to a public chat channel in a public screen area of the live streaming room interface; and the step 102 includes: when the customized chat channel corresponding to the live streaming room exists, in response to the first channel switching operation, displaying the first chat content corresponding to the customized chat channel on the live streaming room interface.

In this embodiment, the live streaming room interface may further include the public chat channel. In the public chat channel, all users in the live streaming room may speak, and the second chat content corresponding to the public chat channel may be displayed in the public screen area, so that all the users in the live streaming room may view the second chat content.

Since there are the public chat channel and the customized chat channel respectively corresponding to the live streaming room, the user may switch between the second chat content corresponding to the currently displayed public chat channel and the first chat content corresponding to the customized chat channel according to actual requirements.

Specifically, when the customized chat channel corresponding to the live streaming room exists, in response to the first channel switching operation triggered by the user, the first chat content corresponding to the customized chat channel may be displayed on the live streaming room interface.

In this case, the public chat channel is displayed on the live streaming room interface after the live streaming room is entered, and the customized chat channel is displayed after a channel switching request is received, which is more in line with the user's expectations and facilitates the user in rapidly switching the channels without exiting the live streaming room interface, thereby improving the interaction efficiency.

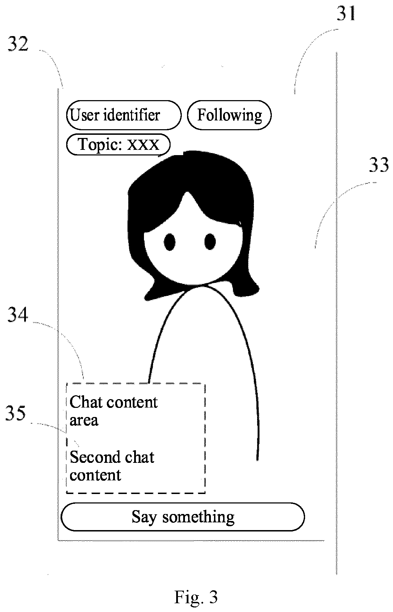

Fig. 3 is a schematic diagram of another live streaming room interface provided in an embodiment of the present disclosure. As shown in Fig. 3, live streaming content 32, identifier information 33 of a target live streamer and a chat content display area 34 may be displayed in a live streaming room interface 31. The second chat content 35 corresponding to the public chat channel may be displayed in the chat content display area 34.

The first chat content corresponding to the customized chat channel may be displayed on the live streaming room interface in response to the first channel switching operation, so that the chat content displayed on the live streaming room interface can be more in line with requirements of users, thereby improving the user experience. Furthermore, the diversity of the live streaming room interface can be increased, thereby making a live streaming function of application software more interesting.

Further, on the basis of any one of the above embodiments, step 102 includes: in response to a sliding trigger operation along the first direction, displaying the first chat content corresponding to the customized chat channel on the live streaming room interface, and canceling display of the second chat content corresponding to the public chat channel simultaneously.

In this embodiment, the first channel switching operation may be triggered by the sliding trigger operation of the user along the first direction. Correspondingly, when the first chat content corresponding to the customized chat channel is currently displayed on the live streaming room interface, in response to the sliding trigger operation of the user along the first direction, the first chat content corresponding to the customized chat channel may be displayed on the live streaming room interface, and the display of the second chat content corresponding to the public chat channel may be canceled simultaneously.

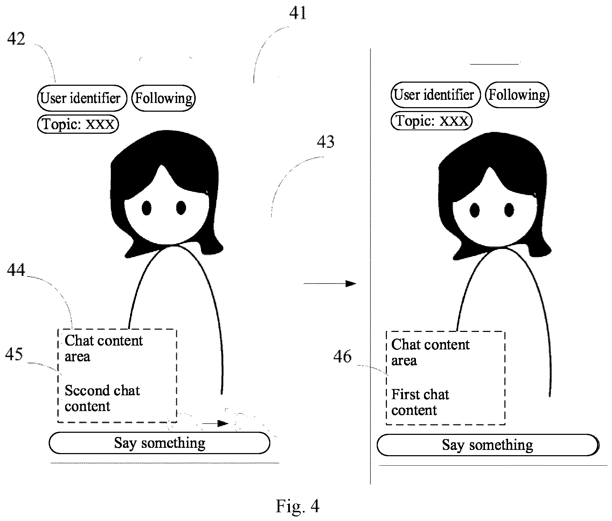

Fig. 4 is a schematic diagram of interface interaction provided in an embodiment of the present disclosure. As shown in Fig. 4, live streaming content 42, identifier information 43 of a target live streamer and a chat content display area 44 may be displayed in a live streaming room interface 41. The second chat content 45 corresponding to the public chat channel may be displayed in the chat content display area 44. In response to a sliding trigger operation of a user along the first direction, the first chat content 46 corresponding to the customized chat channel may be displayed on the live streaming room interface 41, and the display of the second chat content 45 corresponding to the public chat channel may be canceled simultaneously. The sliding trigger operation along the first direction may be a rightward sliding operation.

According to the sliding trigger operation along the first direction, the first chat content corresponding to the customized chat channel may be displayed on the live streaming room interface, and the display of the second chat content corresponding to the public chat channel may be canceled simultaneously, so that the user can flexibly switch between the first chat content corresponding to the customized chat channel and the second chat content corresponding to the public chat channel, the operation is relatively simple, and the content displayed on the live streaming room interface can be more in line with the requirements of the user. Furthermore, the display of the second chat content corresponding to the public chat channel is canceled while the first chat content corresponding to the customized chat channel is displayed, so that the display space of the live streaming room interface can be utilized reasonably.

Further, on the basis of any one of the above embodiments, step 102 includes: displaying the first chat content corresponding to the customized chat channel in the public screen area of the live streaming room interface.

Further, the method further includes: in response to the second channel switching operation, displaying the second chat content corresponding to the public chat channel in the public screen area of the live streaming room interface.

In this embodiment, the first chat content corresponding to the customized chat channel may be currently displayed on the live streaming room interface, and the user may switch the first chat content displayed currently to the second chat content corresponding to the public chat channel according to requirements. Specifically, the second channel switching operation triggered by the user may be acquired, so that the second chat content corresponding to the public chat channel is displayed in the public screen area of the live streaming room interface.

The second channel switching operation may be generated by the user triggering the display interface through a preset gesture, or may be generated by triggering a preset switching icon, which is not limited in the present disclosure.

Optionally, when the second chat content is displayed on the live streaming room interface, in response to having acquired a special reminder triggered by any associated object in the customized chat channel, reminder information is displayed in the preset display area of the live streaming room interface, where the reminder information is used to remind the user of a special reminder to be checked in the customized chat channel. When the second chat content is displayed on the live streaming room interface, in response to any associated user in the customized chat channel giving a special reminder to the user, or notification information existing in the customized chat channel, the reminder information may be displayed at a preset position of the live streaming room interface, so that the user can know the special reminder in a timely manner. The reminder information may be a pop-up reminder, or may be a highlight display of an identifier of the customized chat channel, which is not limited in the present disclosure. The reminder information is displayed when the special reminder is acquired, so that the user can more intuitively know the special reminder to be checked in the customized chat channel, thereby ensuring that the user will not miss out important information in the customized chat channel when viewing the second chat content in the public screen area.

The second chat content corresponding to the public chat channel is displayed in the public screen area of the live streaming room interface by acquiring the second channel switching operation triggered by the user, so that the chat content can be switched rapidly, and the operation is more convenient. Therefore, the chat content displayed on the live streaming room interface can be more in line with requirements of users, thereby improving the user experience. Furthermore, the diversity of the display interface of the live streaming room can be increased, thereby making a live streaming function of application software more interesting.

Optionally, on the basis of any one of the above embodiments, the in response to the second channel switching operation, displaying the second chat content corresponding to the public chat channel in the public screen area of the live streaming room interface, includes: in response to a sliding trigger operation along the second direction, displaying the second chat content corresponding to the public chat channel on the live streaming room interface, and canceling display of the first chat content corresponding to the customized chat channel simultaneously.

In this embodiment, the second channel switching operation may specifically be generated by the sliding trigger operation along the second direction. Specifically, when the second chat content is displayed in the current live streaming room interface, in response to the sliding trigger operation triggered along the second direction, the second chat content corresponding to the public chat channel may be displayed on the live streaming room interface, and the display of the first chat content corresponding to the customized chat channel may be canceled simultaneously.

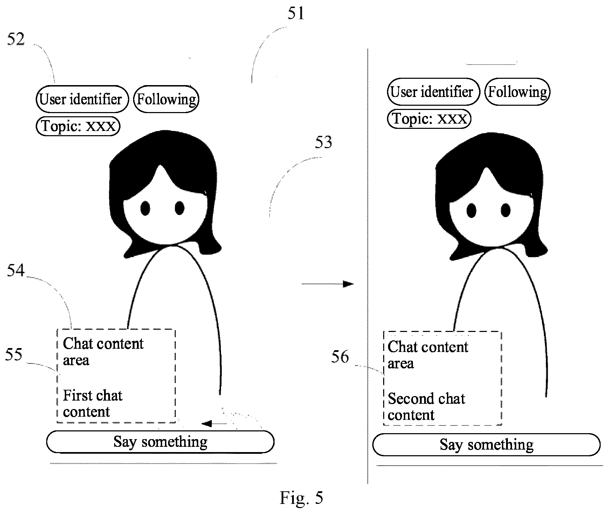

Fig. 5 is another schematic diagram of interface interaction provided in an embodiment of the present disclosure. As shown in Fig. 5, a live streaming room interface 51 includes live streaming content 52, an identifier 53 of a target live streamer and a preset chat content area 54. The first chat content 55 corresponding to the customized chat channel is displayed in the chat content area 54. In response to a sliding trigger operation along the second direction, the second chat content 56 corresponding to the public chat channel may be displayed on the live streaming room interface 51, and the display of the first chat content 55 corresponding to the customized chat channel may be canceled simultaneously. The sliding trigger operation along the second direction may specifically be a leftward sliding trigger operation.

In response to the second channel switching operation, the second chat content corresponding to the public chat channel is displayed on the live streaming room interface, and the display of the first chat content corresponding to the customized chat channel is canceled simultaneously. Therefore, a user can flexibly switch between the first chat content corresponding to the customized chat channel and the second chat content corresponding to the public chat channel, and the operation is relatively simple. In addition, the display space of the live streaming room interface can be applied reasonably, so that the displayed content can be more in line with requirements of users, thereby improving the user experience.

Further, on the basis of any one of the above embodiments, the first identifier corresponding to the customized chat channel and the second identifier corresponding to the public chat channel are displayed on the live streaming room interface.

The method further includes: in response to the first channel switching operation, highlighting the first identifier corresponding to the customized chat channel on the live streaming room interface; or in response to the second channel switching operation, highlighting the second identifier corresponding to the public chat channel on the live streaming room interface.

In this embodiment, the first identifier corresponding to the customized chat channel and the second identifier corresponding to the public chat channel may further be displayed on the live streaming room interface. The identifier information may be set below the chat content, or may be set in a preset area around the chat content. The position and form of the identifier information are not limited in the present disclosure. The identifier information corresponding to different chat channels may be the same identifier information, or may also be different identifier information, which is not limited in the present disclosure.

Specifically, when the second chat content corresponding to the public chat channel is switched to the first chat content corresponding to the customized chat channel in response to the first channel switching operation, the first identifier corresponding to the first chat content may be highlighted accordingly, so that user can more intuitively determine the chat content displayed currently. Alternatively, when the first chat content corresponding to the customized chat channel is switched to the second chat content corresponding to the public chat channel in response to the second channel switching operation, the second identifier corresponding to the public chat channel may be highlighted on the live streaming room interface.

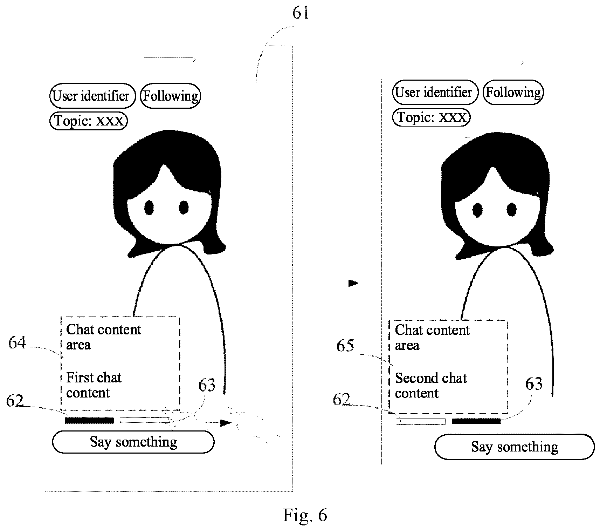

Fig. 6 is another schematic diagram of interface interaction provided in an embodiment of the present disclosure. As shown in Fig. 6, the first identifier 62 corresponding to the customized chat channel and the second identifier 63 corresponding to the public chat channel are further displayed in a live streaming room interface 61. When the first chat content 64 corresponding to the customized chat channel is displayed on the live streaming room interface 61 according to the first channel switching operation, the first identifier 62 corresponding to the customized chat channel may be highlighted. When second chat content 65 corresponding to the public chat channel is displayed on the live streaming room interface 61 according to the second channel switching operation, the second identifier 63 corresponding to the public chat channel may be highlighted accordingly.

The first identifier corresponding to the customized chat channel and the second identifier corresponding to the public chat channel are respectively set, and the corresponding identifier is controlled to be displayed differently according to the chat channel displayed currently, so that the chat content viewed currently can be determined intuitively without the need to view the details in the chat channel displayed currently, thereby further simplifying the operation flow of the live streaming room interface.

Further, on the basis of any one of the above embodiments, displaying the first chat content corresponding to the customized chat channel on the live streaming room interface includes: displaying the first chat content corresponding to the customized chat channel in the first area on the live streaming room interface .

The method further includes: displaying the second chat content corresponding to a public chat channel in the second area outside of the first area on the live streaming room interface .

In this embodiment, the first chat content corresponding to the customized chat channel and the second chat content corresponding to the public chat channel may be displayed on the live streaming room interface simultaneously. Specifically, the first chat content corresponding to the customized chat channel may be displayed in the first area on the live streaming room interface, and the second chat content corresponding to the public chat channel may be displayed in the second area outside of the first area on the live streaming room interface.

Further, on the basis of any one of the above embodiments, the method further includes: creating the customized chat channel.

In this embodiment, in order to display the first chat content corresponding to the customized channel, the customized chat channel needs to be established first. Specifically, the customized chat channel may be created by the first user, or be created by another user other than the first user. The first user may request to join the customized chat channel created by the other user, and after the first user joins the customized chat channel, the customized chat channel may be triggered to be displayed on the live streaming room interface.

Therefore, the demand of the user to create the customized chat channel different from the public chat channel according to their own requirements can be met, thereby enriching the interaction mode among users in the live streaming room, and improving the user experience.

Optionally, on the basis of any one of the above embodiments, the creating the customized chat channel includes: in response to a channel creation request for the live streaming room, displaying a customized chat channel creation page on the live streaming room interface; in response to an input operation for the customized chat channel creation page, acquiring channel information corresponding to the input operation; and creating the customized chat channel according to the channel information.

In this embodiment, the customized chat channel may be created and generated according to the channel creation request triggered by a user. Specifically, the customized chat channel creation page is displayed on the live streaming room interface in response to the channel creation request that is triggered by the user for the live streaming room. The user may input the channel information on the customized chat channel creation page. Specifically, the channel information includes one or more of a channel name, a channel type, and a channel display style. The customized chat channel is created according to the channel information input by the user.

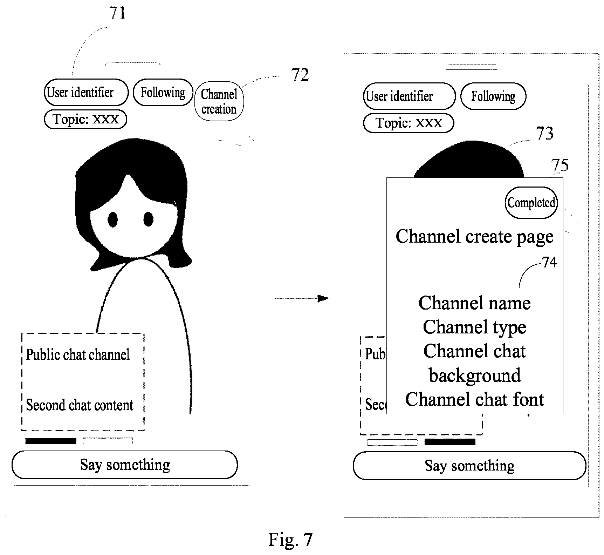

Fig. 7 is another schematic diagram of interface interaction provided in an embodiment of the present disclosure. As shown in Fig. 7, a channel creation icon 72 is displayed in a preset area of a live streaming room interface 71. In response to a channel creation request generated by a user by triggering the channel creation icon 72, a customized channel create page 73 may be displayed on the live streaming room interface 71. The user may input channel information 74 on the channel create page 73, where the channel information 74 may specifically include one or more of a channel name, a channel type, and a channel display style (such as a channel chat background, a channel chat font, and a channel display box). In response to a trigger operation by the user on a preset completion icon 75, a customized chat channel is created, and the customized chat channel 76 is displayed on the live streaming room interface 71.

Compared with the related art in which a chat channel display style is set by a platform, the present disclosure provides a channel create page, on which a user can set the channel display style according to their own requirements, which improves the interaction space, and enables the generated customized chat channel to be more in line with the requirements, thereby further improving the user experience.

In addition, the channel create page may include a preview area, and in response to the channel information being input by the user, a preview effect of the customized chat channel is displayed in the preview area according to the channel information, so as to facilitate the user to adjust setting information in a timely manner.

Optionally, during the process of setting the customized chat channel, the user may set a display mode of the first chat content in the customized chat channel, where the display mode may include scrolling display and fixed display. During the scrolling display, the chat content displayed in a display interface may scroll with chat information sent by the user, so that the user can view more chat content. During the fixed display, the chat content may be switched according to the user's manual triggering, and when a trigger operation of the user is not acquired, the display content when the user stops triggering is fixedly displayed. By setting different display modes of the chat content, the display of the chat content on the live streaming room interface can be more in line with a usual display mode of the user, so that the user can more conveniently view the chat content of their interest on the live streaming room interface.

Optionally, the user may also adjust input boxes of different chat channels. The public chat channel and the customized chat channel may share the same chat content input box. The input box may be fixed at the bottom of the live streaming room interface, and is not switched with the chat channel when switching the chat channel. Alternatively, the user may set different chat content input boxes respectively for the public chat channel and the customized chat channel according to actual requirements. The user may adjust the shape, size, etc. of the chat content input box. When the chat channel is switched, the chat content input box corresponding to the chat channel is displayed. By setting the chat content input box, the display style of the chat content input box on the live streaming room interface can be closer to a preferred display style of the user, thereby further improving the user experience.

Optionally, on the basis of any one of the above embodiments, the creating the customized chat channel includes: displaying prompt information in a preset area of the live streaming room interface, where the prompt information includes object identifier information of a candidate object corresponding to a custom chat channel and a channel creation control for the custom chat channel; and in response to a trigger operation for the channel creation control, creating the customized chat channel, and sending invitation information to the candidate object, so that the candidate object joins the customized chat channel according to the invitation information.

In this embodiment, when an associated object of a target object enters the live streaming room, prompt information may be displayed in the preset area of the live streaming room interface, where the prompt information includes the object identifier information of the candidate object corresponding to the custom chat channel and the channel creation control for the custom chat channel.

The user may implement the creation of the customized chat channel by performing the trigger operation on the channel creation control. Specifically, in response to the trigger operation for the channel creation control, the customized chat channel is created, and the invitation information is sent to the candidate object. Accordingly, the candidate object may perform a trigger operation on the invitation information. In response to the trigger operation, a terminal device of the candidate object may first determine whether the candidate object has permission to watch the live streaming room, and when determining that the candidate object has permission to watch the live streaming room, the candidate object may join the customized chat channel according to the invitation information.

By displaying the prompt information, the customized chat channel is established in response to the trigger operation by the user on the channel creation control in the prompt information. Therefore, the requirement of the target object for interaction with another object on the live streaming room interface can be met, thereby improving the display diversity of the live streaming room interface.

Optionally, on the basis of any one of the above embodiments, the creating the customized chat channel includes: in response to a trigger operation on an identifier of a candidate object who meets a preset condition and corresponds to the second chat content, or in response to a trigger operation on an identifier of a candidate object who meets the preset condition and in a list of users watching a live stream, displaying presentation information of the candidate object, where the presentation information includes a channel creation control corresponding to the customized chat channel; and in response to a trigger operation for the channel creation control, establishing the customized chat channel, and sending invitation information to the candidate object, so that the candidate object joins the customized chat channel according to the invitation information.

When the target object is watching the live streaming content of the live streaming room, in response to the target object being interested in the chat content published by any candidate object in the public screen area, who meets a preset condition, or any candidate object in a list of associated objects in the live streaming room who meets a preset condition, and when the target object wants to have a chat with the candidate object, a trigger operation may be performed on an identifier of the candidate object. The candidate object who meets the preset condition may specifically be a friend who is interconnected with the user. Presentation information corresponding to the candidate object may be displayed in response to the trigger operation. The presentation information may include profile information corresponding to the candidate object, and the channel creation control corresponding to the customized chat channel.

The user may implement the creation of the customized chat channel by performing the trigger operation on the channel creation control. Specifically, in response to the trigger operation for the channel creation control, the customized chat channel is created, and the invitation information is sent to the candidate object. Accordingly, the candidate object may perform a trigger operation on the invitation information. In response to the candidate object having permission to watch the live streaming room, the candidate object may join the customized chat channel according to the invitation information.

It should be noted that the user may implement the creation of the customized chat channel by performing the trigger operation on the channel creation control. When the customized chat channel has been created, the customized chat channel may only include the user who creates the customized chat channel. After other users acquire the invitation information, in response to having acquired an instruction of confirming to join the channel that is triggered by the other users, then the other users may join the customized chat channel .

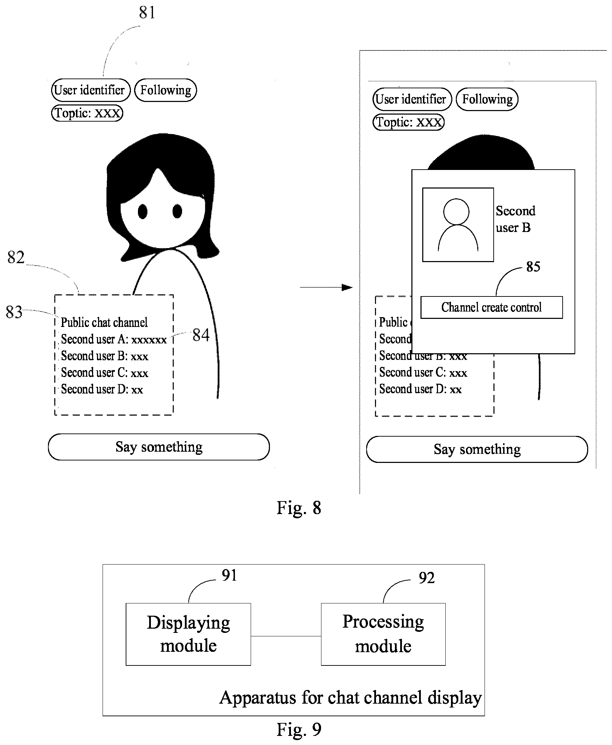

Fig. 8 is another schematic diagram of interface interaction provided in an embodiment of the present disclosure. As shown in Fig. 8, the second chat content 82 corresponding to the public chat channel may be currently displayed in a live streaming room interface 81. The second chat content 82 may include chat information sent by a plurality of members in the customized chat channel, and each piece of the chat information includes an identifier 83 of the member in the channel and text information 84. In response to a trigger operation by a user on the identifier 83 of any channel member, a channel creation control 85 corresponding to the customized chat channel may be displayed. In response to a trigger operation by the user on the channel creation control 85 corresponding to the customized chat channel, the customized chat channel may be established, and the first chat content corresponding to the customized chat channel may be displayed on the live streaming room interface 81.

By a trigger operation performed on an identifier of a candidate object, in response to the trigger operation, presentation information corresponding to the candidate object may be displayed, and in response to a trigger operation by the user on a channel creation control in prompt information, the customized chat channel is established. Therefore, the user can rapidly establish the customized chat channel through the trigger operation, and the operation is relatively simple.

Further, on the basis of any one of the above embodiments, the method further includes: in response to an object removal request for the customized chat channel, displaying a list of channel-associated objects corresponding to the customized chat channel; and in response to a removal operation for a channel-associated object in the list of the channel-associated objects corresponding to the customized chat channel, canceling an association relationship between the channel-associated object and the customized chat channel.

In this embodiment, after establishing the customized chat channel, the user may also perform, by themselves and according to actual requirements, a removal operation on a channel-associated object who joins the customized chat channel.

Specifically, the user may trigger the object removal request in the first chat content corresponding to the customized chat channel by triggering a preset removal icon. In response to the object removal request, the list of channel-associated objects corresponding to the customized chat channel may be displayed, so that the user may view the channel-associated objects who join the customized chat channel through the list of channel-associated objects. The user may trigger the removal operation in the list of channel-associated objects by triggering a preset association cancel icon, by triggering an identifier of a channel-associated object, or by inputting a preset gesture in the current interface. An association relationship between the channel-associated object and the customized chat channel may be canceled in response to the removal operation.

Through the removal operation on the channel-associated object who joins the customized chat channel, the channel-associated objects in the current customized chat channel can be more in line with the requirements of the user.

Further, on the basis of any one of the above embodiments, the method further includes: in response to an object addition request for the customized chat channel, displaying a list of candidate objects; and in response to a selection operation for a candidate object in the list of the candidate objects, sending invitation information to the candidate object, so that the candidate object joins the customized chat channel according to the invitation information, and an association relationship between the candidate object and the customized chat channel is established.

In this embodiment, after establishing the customized chat channel, the user may also perform, by themselves and according to actual requirements, an addition operation on channel-associated objects who join the customized chat channel.

The user may trigger an object addition request by triggering a preset addition icon to display a list of candidate objects. The user may view the channel-associated objects who join the customized chat channel through the list of channel-associated objects. The user may trigger the addition operation in the list of channel-associated objects by triggering a preset association icon, by triggering an identifier of a channel-associated object, or by inputting a preset gesture in the current interface. An association relationship between the channel-associated object and the customized chat channel may be established in response to the addition operation.

Through the addition operation on the channel-associated object who joins the customized chat channel, the channel-associated objects in the current customized chat channel can be more in line with the requirements of the user.

Further, on the basis of any one of the above embodiments, after the step 102, the method further includes: in response to a switching operation for a current live streaming room interface, switching to a next live streaming room interface; and stopping display of the first chat content corresponding to the current live streaming room interface .

In this embodiment, there is an association relationship between the customized chat channel and the live streaming room. That is, when switching the live streaming room that the user is watching, the user may accordingly switch the first chat content in the displayed customized chat channel.

Specifically, in response to the switching operation by the user on the current live streaming room interface, the next live streaming room interface is switched to; and the first chat content corresponding to the current live streaming room interface is stopped to be displayed.

Optionally, in response to a customized chat channel that has been joined or established by the user in the next live streaming room, the first chat content of a customized chat channel corresponding to the next live streaming room may be displayed.

Further, on the basis of any one of the above embodiments, after the stopping the display of the first chat content corresponding to the current live streaming room interface, the method further includes: in response to a trigger operation for returning to the current live streaming room interface, displaying the current live streaming room interface, and restoring the display of the first chat content corresponding to the current live streaming room.

In this embodiment, when the user switches back to the current live streaming room interface, the first chat content corresponding to the current live streaming room interface may be redisplayed. Optionally, when switching to other live streaming room, the user may enter the other live streaming room and cancel the display of the first chat content; and when switching back to the current live streaming room, in response to a trigger operation for returning to the current live streaming room interface, the user may restore the display of the first chat content.

The association relationship is established between the customized chat channel and the live streaming room, and the first chat content of the displayed customized chat channel is switched according to the switching operation by the user on the live streaming room, so that the matching degree between the displayed chat content and the live streaming content can be improved, thereby further improving the user experience.

Fig. 9 is a structural schematic diagram of an apparatus for chat channel display provided in an embodiment of the present disclosure. As shown in Fig. 9, the apparatus includes a displaying module 91 and a processing module 92. Specifically, the displaying module 91 is configured to display a live streaming room interface; and the processing module 92 is configured to, in response to a customized chat channel corresponding to a live streaming room existing, display the first chat content corresponding to the customized chat channel on the live streaming room interface.

Further, on the basis of any one of the above embodiments, the processing module is configured to: when the customized chat channel corresponding to the live streaming room exists, in response to a display instruction for the first chat content corresponding to the customized chat channel, display the first chat content corresponding to the customized chat channel on the live streaming room interface.

Further, on the basis of any one of the above embodiments, the displaying module is configured to display the live streaming room interface, and display the second chat content corresponding to a public chat channel in a public screen area of the live streaming room interface; and the processing module is configured to, when the customized chat channel corresponding to the live streaming room exists, in response to the first channel switching operation, display the first chat content corresponding to the customized chat channel on the live streaming room interface.

Further, on the basis of any one of the above embodiments, the processing module is configured to display the first chat content corresponding to the customized chat channel in the public screen area of the live streaming room interface. The apparatus further includes a switching module, which is configured to, in response to the second channel switching operation, display the second chat content corresponding to the public chat channel in the public screen area of the live streaming room interface .

Further, on the basis of any one of the above embodiments, the processing module is configured to, in response to a sliding trigger operation along the first direction, display the first chat content corresponding to the customized chat channel on the live streaming room interface, and cancel display of the second chat content corresponding to the public chat channel simultaneously.

Further, on the basis of any one of the above embodiments, the switching module is configured to, in response to a sliding trigger operation along the second direction, display the second chat content corresponding to the public chat channel on the live streaming room interface, and cancel display of the first chat content corresponding to the customized chat channel simultaneously.

Further, on the basis of any one of the above embodiments, the first identifier corresponding to the customized chat channel and the second identifier corresponding to the public chat channel are displayed on the live streaming room interface. The apparatus further includes an identifier displaying module, which is configured to: in response to the first channel switching operation, highlight the first identifier corresponding to the customized chat channel on the live streaming room interface; or in response to the second channel switching operation, highlight the second identifier corresponding to the public chat channel on the live streaming room interface.

Further, on the basis of any one of the above embodiments, the processing module is configured to display the first chat content corresponding to the customized chat channel in the first area on the live streaming room interface; and the displaying module is further configured to display the second chat content corresponding to a public chat channel in a second area outside of the first area on the live streaming room interface.

Further, on the basis of any one of the above embodiments, the apparatus further includes a creation module, which is configured to create the customized chat channel.

Further, on the basis of any one of the above embodiments, the creation module is configured to: in response to a channel creation request for the live streaming room, display a customized chat channel creation page on the live streaming room interface; in response to an input operation for the customized chat channel creation page, acquire channel information corresponding to the input operation; and create the customized chat channel based on the channel information.

Further, on the basis of any one of the above embodiments, the creation module is configured to: display prompt information in a preset area of the live streaming room interface, where the prompt information includes object identifier information of a candidate object corresponding to a custom chat channel and a channel creation control for the custom chat channel; and in response to a trigger operation for the channel creation control, create the customized chat channel, and send invitation information to the candidate object, so that the candidate object joins the customized chat channel according to the invitation information.

Further, on the basis of any one of the above embodiments, the creation module is configured to: in response to a trigger operation on an identifier of a candidate object who meets a preset condition and corresponds to the second chat content, or in response to a trigger operation on an identifier of a candidate object who meets the preset condition and in a list of users watching a live stream, display presentation information of the candidate object, where the presentation information includes a channel creation control corresponding to the customized chat channel; and in response to a trigger operation for the channel creation control, establish the customized chat channel, and send invitation information to the candidate object, so that the candidate object joins the customized chat channel based on the invitation information.

Further, on the basis of any one of the above embodiments, the displaying module is further configured to, in response to an object removal request for the customized chat channel, display a list of channel-associated objects corresponding to the customized chat channel; and the apparatus further included a removal module, which is configured to, in response to a removal operation for a channel-associated object in the list of the channel-associated objects corresponding to the customized chat channel, cancel an association relationship between the channel-associated object and the customized chat channel.

Further, on the basis of any one of the above embodiments, the displaying module is further configured to, in response to an object addition request for the customized chat channel, display a list of candidate objects; and the apparatus further includes an addition module, which is configured to, in response to a selection operation for a candidate object in the list of the candidate objects, send invitation information to the candidate object, so that the candidate object joins the customized chat channel according to the invitation information, and an association relationship between the candidate object and the customized chat channel is established.

Further, on the basis of any one of the above embodiments, the switching module is further configured to, in response to a switching operation for a current live streaming room interface, switch to a next live streaming room interface; and the apparatus further includes a controlling module, which is configured to stop display of the first chat content corresponding to the current live streaming room interface.

Further, on the basis of any one of the above embodiments, the apparatus further includes a redisplaying module, which is configured to, in response to a trigger operation for returning to the current live streaming room interface, display the current live streaming room interface, and restore the display of the first chat content corresponding to the current live streaming room.

The apparatus provided in this embodiment may be configured to execute the technical solution of the above embodiments. The implementation principle and technical effects thereof are similar, and are not described herein again in this embodiment.

To implement the above embodiments, an embodiment of the present disclosure further provides an electronic device. The electronic device includes a processor and a memory. The memory stores computer-executable instructions; and the processor executes the computer-executable instructions stored in the memory causing the processor to execute the method for chat channel display according to any one of the above embodiments.

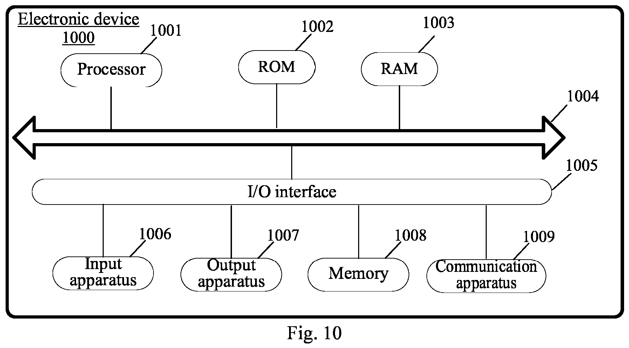

Fig. 10 is a structural schematic diagram of an electronic device provided in an embodiment of the present disclosure. As shown in Fig. 10, the electronic device 1000 may be a terminal device or a server. The terminal device may include, but is not limited to, a mobile terminal such as a mobile phone, a notebook computer, a digital broadcast receiver, a personal digital assistant (PDA), a tablet computer (Portable Android Device, PAD), a portable media player (PMP), and a vehicle-mounted terminal (such as a vehicle navigation terminal), and a fixed terminal such as a digital TV and a desktop computer. The electronic device shown in Fig. 10 is merely an example, and shall not impose any limitation on the function and scope of use of the embodiments of the present disclosure.

As shown in Fig. 10, the electronic device 1000 may include a processor (for example, a central processor and a graphics processor) 1001 that may perform a variety of appropriate actions and processing in accordance with a program stored in a read only memory (ROM) 1002 or a program loaded from a memory 1008 into a random access memory (RAM) 1003. The RAM 1003 further stores various programs and data required for the operation of the electronic device 1000. The processor 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the memory 1008 including, for example, a tape and a hard disk; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1009, installed from the memory 1008, or installed from the ROM 1002. When the computer program is executed by the processor 1001, the above-mentioned functions defined in the method of the embodiment of the present disclosure are performed.

Another embodiment of the present disclosure further provides a computer-readable storage medium, which stores computer-executable instructions. When the computer-executable instructions are executed by a processor, the method for chat channel display according to any one of the above embodiments is caused to be implemented.

Another embodiment of the present disclosure further provides a computer program product, which includes a computer program. When the computer program is executed by a processor, the method for chat channel display according to any one of the above embodiments is caused to be implemented.

Another embodiment of the present disclosure further provides a computer program. When the computer program is executed by a processor, the method for chat channel display according to any one of the above embodiments is caused to be implemented.

According to the method and apparatus for chat channel display, the electronic device, the computer-readable storage medium, the computer program product and the computer program provided in the embodiments of the present disclosure, when it is determined that there is a customized chat channel corresponding to a live streaming room interface, the first chat content corresponding to the customized chat channel is displayed on the live streaming room interface. Therefore, the chat and interaction function of the live streaming room is enriched, and the requirements of users are met, thereby improving the user experience.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electric connection with one or more wires, a portable computer disk, a hard disk, a random access memory (RAM), a read only memory (ROM), an erasable programmable read only memory (EPROMP or flash memory), an optical fiber, a portable compact disc read only memory (CD-ROM), an optical storage device, a magnetic storage device, or any appropriate combination of the above. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. When a remote computer is involved, the remote computer may be connected to a user computer through any type of network, including a local area network (LAN) or a wide area network (WAN), or may be connected to an external computer (for example, connected by using an Internet service provider through the Internet).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, the first acquiring unit may alternatively be described as "a unit for acquiring at least two Internet Protocol addresses".

The functions described herein above may be performed at least partially by one or more hardware logic components. For example, without limitation, exemplary types of hardware logic components that may be used include: a field-programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

In the first aspect, according to one or more embodiments of the present disclosure, a method for chat channel display is provided. The method includes: displaying a live streaming room interface; and in response to a customized chat channel corresponding to a live streaming room existing, displaying the first chat content corresponding to the customized chat channel on the live streaming room interface.

According to one or more embodiments of the present disclosure, the in response to a customized chat channel corresponding to a live streaming room existing, displaying first chat content corresponding to the customized chat channel on the live streaming room interface, includes: when the customized chat channel corresponding to the live streaming room exists, in response to a display instruction for the first chat content corresponding to the customized chat channel, displaying the first chat content corresponding to the customized chat channel on the live streaming room interface.

According to one or more embodiments of the present disclosure, the displaying a live streaming room interface includes: displaying the live streaming room interface, and displaying the second chat content corresponding to a public chat channel in a public screen area of the live streaming room interface; and the in response to a customized chat channel corresponding to a live streaming room existing, displaying the first chat content corresponding to the customized chat channel on the live streaming room interface, includes: when the customized chat channel corresponding to the live streaming room exists, in response to a first channel switching operation, displaying the first chat content corresponding to the customized chat channel on the live streaming room interface.

According to one or more embodiments of the present disclosure, the displaying the first chat content corresponding to the customized chat channel on the live streaming room interface includes: displaying the first chat content corresponding to the customized chat channel in the public screen area of the live streaming room interface.

The method further includes: in response to the second channel switching operation, displaying the second chat content corresponding to the public chat channel in the public screen area of the live streaming room interface.

According to one or more embodiments of the present disclosure, the in response to the first channel switching operation, displaying the first chat content corresponding to the customized chat channel on the live streaming room interface, includes: in response to a sliding trigger operation along the first direction, displaying the first chat content corresponding to the customized chat channel on the live streaming room interface, and canceling display of the second chat content corresponding to the public chat channel simultaneously.

According to one or more embodiments of the present disclosure, the in response to the second channel switching operation, displaying the second chat content corresponding to the public chat channel in the public screen area of the live streaming room interface, includes: in response to a sliding trigger operation along a second direction, displaying the second chat content corresponding to the public chat channel on the live streaming room interface, and canceling display of the first chat content corresponding to the customized chat channel simultaneously.

According to one or more embodiments of the present disclosure, the first identifier corresponding to the customized chat channel and the second identifier corresponding to the public chat channel are displayed on the live streaming room interface.

The method further includes: in response to the first channel switching operation, highlighting the first identifier corresponding to the customized chat channel on the live streaming room interface; or in response to the second channel switching operation, highlighting the second identifier corresponding to the public chat channel on the live streaming room interface.

According to one or more embodiments of the present disclosure, the displaying the first chat content corresponding to the customized chat channel on the live streaming room interface, includes: displaying the first chat content corresponding to the customized chat channel in a first area on the live streaming room interface.

The method further includes: displaying the second chat content corresponding to a public chat channel in a second area outside of the first area on the live streaming room interface.

According to one or more embodiments of the present disclosure, the method further includes: creating the customized chat channel.

According to one or more embodiments of the present disclosure, the creating the customized chat channel includes: in response to a channel creation request for the live streaming room, displaying a customized chat channel creation page on the live streaming room interface; in response to an input operation for the customized chat channel creation page, acquiring channel information corresponding to the input operation; and creating the customized chat channel according to the channel information.

According to one or more embodiments of the present disclosure, the creating the customized chat channel includes: displaying prompt information in a preset area of the live streaming room interface, where the prompt information includes object identifier information of a candidate object corresponding to a custom chat channel and a channel creation control for the custom chat channel; and in response to a trigger operation for the channel creation control, creating the customized chat channel, and sending invitation information to the candidate object, so that the candidate object joins the customized chat channel according to the invitation information.

According to one or more embodiments of the present disclosure, the creating the customized chat channel includes: in response to a trigger operation on an identifier of a candidate object who meets a preset condition and corresponds to the second chat content, or in response to a trigger operation on an identifier of a candidate object who meets the preset condition and in a list of users watching a live stream, displaying presentation information of the candidate object, where the presentation information includes a channel creation control corresponding to the customized chat channel; and in response to a trigger operation for the channel creation control, establishing the customized chat channel, and sending invitation information to the candidate object, so that the candidate object joins the customized chat channel according to the invitation information.

According to one or more embodiments of the present disclosure, the method further includes: in response to an object removal request for the customized chat channel, displaying a list of channel-associated objects corresponding to the customized chat channel; and in response to a removal operation for a channel-associated object in the list of the channel-associated objects corresponding to the customized chat channel, canceling an association relationship between the channel-associated object and the customized chat channel.

According to one or more embodiments of the present disclosure, the method further includes: in response to an object addition request for the customized chat channel, displaying a list of candidate objects; and in response to a selection operation for a candidate object in the list of the candidate objects, sending invitation information to the candidate object, so that the candidate object joins the customized chat channel according to the invitation information, and an association relationship between the candidate object and the customized chat channel is established.

According to one or more embodiments of the present disclosure, in response to a customized chat channel corresponding to a live streaming room existing, after displaying the first chat content corresponding to the customized chat channel on the live streaming room interface, the method further includes: in response to a switching operation for a current live streaming room interface, switching to a next live streaming room interface; and stopping display of the first chat content corresponding to the current live streaming room interface.

According to one or more embodiments of the present disclosure, after the stopping display of the first chat content corresponding to the current live streaming room interface, the method further includes: in response to a trigger operation for returning to the current live streaming room interface, displaying the current live streaming room interface, and restoring the display of the first chat content corresponding to the current live streaming room.

In the second aspect, according to one or more embodiments of the present disclosure, an apparatus for chat channel display is provided. The apparatus includes a displaying module and a processing module. The displaying module is configured to display a live streaming room interface. The processing module is configured to, in response to a customized chat channel corresponding to a live streaming room existing, display the first chat content corresponding to the customized chat channel on the live streaming room interface.

According to one or more embodiments of the present disclosure, the processing module is configured to: when the customized chat channel corresponding to the live streaming room exists, in response to a display instruction for the first chat content corresponding to the customized chat channel, display the first chat content corresponding to the customized chat channel on the live streaming room interface.

According to one or more embodiments of the present disclosure, the displaying module is configured to display the live streaming room interface, and display the second chat content corresponding to a public chat channel in a public screen area of the live streaming room interface; and the processing module is configured to, when the customized chat channel corresponding to the live streaming room exists, in response to the first channel switching operation, display the first chat content corresponding to the customized chat channel on the live streaming room interface.

According to one or more embodiments of the present disclosure, the processing module is configured to display the first chat content corresponding to the customized chat channel in the public screen area of the live streaming room interface.

The apparatus further includes a switching module, which is configured to display the second chat content corresponding to the public chat channel in the public screen area of the live streaming room interface in response to the second channel switching operation.

According to one or more embodiments of the present disclosure, the processing module is configured to display the first chat content corresponding to the customized chat channel on the live streaming room interface in response to a sliding trigger operation along the first direction, and cancel the display of the second chat content corresponding to the public chat channel simultaneously.

According to one or more embodiments of the present disclosure, the switching module is configured to, in response to a sliding trigger operation along the second direction, display the second chat content corresponding to the public chat channel on the live streaming room interface, and cancel display of the first chat content corresponding to the customized chat channel simultaneously.

According to one or more embodiments of the present disclosure, the first identifier corresponding to the customized chat channel and the second identifier corresponding to the public chat channel are displayed on the live streaming room interface.

The apparatus further includes an identifier displaying module, which is configured to: in response to the first channel switching operation, highlight the first identifier corresponding to the customized chat channel on the live streaming room interface; or in response to the second channel switching operation, highlight the second identifier corresponding to the public chat channel on the live streaming room interface.

According to one or more embodiments of the present disclosure, the processing module is configured to display the first chat content corresponding to the customized chat channel in the first area on the live streaming room interface; and the displaying module is further configured to display second chat content corresponding to the public chat channel in the second area outside of the first area on the live streaming room interface.

According to one or more embodiments of the present disclosure, the apparatus further includes a creation module, which is configured to create the customized chat channel.

According to one or more embodiments of the present disclosure, the creation module is configured to: in response to a channel creation request for the live streaming room, display a customized chat channel creation page on the live streaming room interface; in response to an input operation for the customized chat channel creation page, acquire channel information corresponding to the input operation; and create the customized chat channel based on the channel information.

According to one or more embodiments of the present disclosure, the creation module is configured to: display prompt information in a preset area of the live streaming room interface, where the prompt information includes object identifier information of a candidate object corresponding to a custom chat channel and a channel creation control for the custom chat channel; and in response to a trigger operation for the channel creation control, create the customized chat channel, and send invitation information to the candidate object, so that the candidate object joins the customized chat channel according to the invitation information.

According to one or more embodiments of the present disclosure, the creation module is configured to: in response to a trigger operation on an identifier of a candidate object who meets a preset condition and corresponds to the second chat content, or in response to a trigger operation on an identifier of a candidate object who meets the preset condition and in a list of users watching a live stream, display presentation information of the candidate object, where the presentation information includes a channel creation control corresponding to the customized chat channel; and in response to a trigger operation for the channel creation control, establish the customized chat channel, and send invitation information to the candidate object, so that the candidate object joins the customized chat channel based on the invitation information.

According to one or more embodiments of the present disclosure, the displaying module is further configured to, in response to an object removal request for the customized chat channel, display a list of channel-associated objects corresponding to the customized chat channel; and the apparatus further includes a removal module, which is configured to, in response to a removal operation for a channel-associated object in the list of the channel-associated objects corresponding to the customized chat channel, cancel an association relationship between the channel-associated object and the customized chat channel.

According to one or more embodiments of the present disclosure, the displaying module is further configured to display a list of candidate objects in response to an object addition request for the customized chat channel; and the apparatus further includes an addition module, which is configured to, in response to a selection operation for a candidate object in the list of the candidate objects, send invitation information to the candidate object, so that the candidate object joins the customized chat channel according to the invitation information, and an association relationship between the candidate object and the customized chat channel is established.

According to one or more embodiments of the present disclosure, the switching module is further configured to, in response to a switching operation for a current live streaming room interface, switch to a next live streaming room interface; and the apparatus further includes a controlling module, which is configured to stop display of the first chat content corresponding to the current live streaming room interface.

According to one or more embodiments of the present disclosure, the apparatus further includes a redisplaying module, which is configured to, in response to a trigger operation for returning to the current live streaming room interface, display the current live streaming room interface, and restore the display of the first chat content corresponding to the current live streaming room.

In the third aspect, according to one or more embodiments of the present disclosure, an electronic device is provided. The electronic device includes at least one processor and a memory. The memory stores computer-executable instructions; and the at least one processor executes the computer-executable instructions stored in the memory causing the at least one processor to execute the method for chat channel display according to the first aspect and various possible designs of the first aspect.

In the fourth aspect, according to one or more embodiments of the present disclosure, a computer-readable storage medium is provided. The computer-readable storage medium stores computer-executable instructions, and when the computer-executable instructions are executed by a processor, the processor is caused to implement the method for chat channel display according to the first aspect and various possible designs of the first aspect.

In the fifth aspect, according to one or more embodiments of the present disclosure, a computer program product is provided. The computer program product includes a computer program, and when the computer program is executed by a processor, the processor is caused to implement the method for chat channel display according to the first aspect and various possible designs of the first aspect.

In the sixth aspect, according to one or more embodiments of the present disclosure, a computer program is provided. When the computer program is executed by a processor, the processor is caused to implement the method for chat channel display according to the first aspect and various possible designs of the first aspect.

The foregoing descriptions are merely preferred embodiments of the present disclosure and explanations of the applied technical principles. A person skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method for chat channel display, comprising:
displaying a live streaming room interface; and
in response to a customized chat channel corresponding to a live streaming room existing, displaying first chat content corresponding to the customized chat channel on the live streaming room interface.

2. The method according to claim 1, wherein the in response to a customized chat channel corresponding to a live streaming room existing, displaying first chat content corresponding to the customized chat channel on the live streaming room interface, comprises:
in response to the customized chat channel corresponding to the live streaming room existing, in response to a display instruction for the first chat content corresponding to the customized chat channel, displaying the first chat content corresponding to the customized chat channel on the live streaming room interface.

3. The method according to claim 1 or 2, wherein the displaying a live streaming room interface, comprises:
displaying the live streaming room interface, and displaying second chat content corresponding to a public chat channel in a public screen area of the live streaming room interface; and
the in response to a customized chat channel corresponding to a live streaming room existing, displaying first chat content corresponding to the customized chat channel on the live streaming room interface, comprises:
in response to the customized chat channel corresponding to the live streaming room existing, in response to a first channel switching operation, displaying the first chat content corresponding to the customized chat channel on the live streaming room interface.

4. The method according to claim 3, wherein the displaying the first chat content corresponding to the customized chat channel on the live streaming room interface, comprises:
displaying the first chat content corresponding to the customized chat channel in the public screen area of the live streaming room interface; and
the method further comprises:
in response to a second channel switching operation, displaying the second chat content corresponding to the public chat channel in the public screen area of the live streaming room interface.

5. The method according to claim 3, wherein the in response to a first channel switching operation, displaying the first chat content corresponding to the customized chat channel on the live streaming room interface, comprises:
in response to a sliding trigger operation along a first direction, displaying the first chat content corresponding to the customized chat channel on the live streaming room interface, and canceling display of the second chat content corresponding to the public chat channel simultaneously.

6. The method according to claim 4, wherein the in response to a second channel switching operation, displaying the second chat content corresponding to the public chat channel in the public screen area of the live streaming room interface, comprises:
in response to a sliding trigger operation along a second direction, displaying the second chat content corresponding to the public chat channel on the live streaming room interface, and canceling display of the first chat content corresponding to the customized chat channel simultaneously.

7. The method according to claim 4, wherein a first identifier corresponding to the customized chat channel and a second identifier corresponding to the public chat channel are displayed on the live streaming room interface; and
the method further comprises:
in response to the first channel switching operation, highlighting the first identifier corresponding to the customized chat channel on the live streaming room interface; or,
in response to the second channel switching operation, highlighting the second identifier corresponding to the public chat channel on the live streaming room interface.

8. The method according to claim 1, wherein the displaying first chat content corresponding to the customized chat channel on the live streaming room interface, comprises:
displaying the first chat content corresponding to the customized chat channel in a first area on the live streaming room interface; and
the method further comprises:
displaying second chat content corresponding to a public chat channel in a second area outside of the first area on the live streaming room interface.

9. The method according to any one of claims 1 to 3, further comprising:
creating the customized chat channel.

10. The method according to claim 9, wherein the creating the customized chat channel, comprises:
in response to a channel creation request for the live streaming room, displaying a customized chat channel creation page on the live streaming room interface;
in response to an input operation for the customized chat channel creation page, acquiring channel information corresponding to the input operation; and
creating the customized chat channel according to the channel information.

11. The method according to claim 9, wherein the creating the customized chat channel, comprises:
displaying prompt information in a preset area of the live streaming room interface, wherein the prompt information comprises object identifier information of a candidate object corresponding to a custom chat channel and a channel creation control for the custom chat channel; and
in response to a trigger operation for the channel creation control, creating the customized chat channel, and sending invitation information to the candidate object, so that the candidate object joins the customized chat channel according to the invitation information.

12. The method according to claim 9, wherein the creating the customized chat channel, comprises:
in response to a trigger operation on an identifier of a candidate object who meets a preset condition and corresponds to the second chat content, or in response to a trigger operation on an identifier of a candidate object who meets the preset condition and in a list of users watching a live stream, displaying presentation information of the candidate object, wherein the presentation information comprises a channel creation control corresponding to the customized chat channel; and
in response to a trigger operation for the channel creation control, establishing the customized chat channel, and sending invitation information to the candidate object, so that the candidate object joins the customized chat channel according to the invitation information.

13. The method according to any one of claims 1, 2, 7 and 8, further comprising:
in response to an object removal request for the customized chat channel, displaying a list of channel-associated objects corresponding to the customized chat channel; and
in response to a removal operation for a channel-associated object in the list of the channel-associated objects corresponding to the customized chat channel, canceling an association relationship between the channel-associated object and the customized chat channel.

14. The method according to any one of claims 1, 2, 7 and 8, further comprising:
in response to an object addition request for the customized chat channel, displaying a list of candidate objects; and
in response to a selection operation for a candidate object in the list of the candidate objects, sending invitation information to the candidate object, so that the candidate object joins the customized chat channel according to the invitation information, and an association relationship between the candidate object and the customized chat channel is established.

15. The method according to any one of claims 1, 2, 7 and 8, wherein, after the in response to a customized chat channel corresponding to a live streaming room existing displaying first chat content corresponding to the customized chat channel on the live streaming room interface, the method further comprises:
in response to a switching operation for a current live streaming room interface, switching to a next live streaming room interface; and
stopping display of first chat content corresponding to the current live streaming room interface.

16. The method according to claim 15, wherein after the stopping display of first chat content corresponding to the current live streaming room interface, the method further comprises:
in response to a trigger operation for returning to the current live streaming room interface, displaying the current live streaming room interface, and restoring the display of the first chat content corresponding to the current live streaming room.

17. An apparatus for chat channel display, comprising:
a displaying module, configured to display a live streaming room interface; and
a processing module, configured to, in response to a customized chat channel corresponding to a live streaming room existing, display first chat content corresponding to the customized chat channel on the live streaming room interface.

18. An electronic device, comprising:
a processor and a memory,
wherein the memory stores computer-executable instructions; and
the processor executes the computer-executable instructions stored in the memory, causing the processor to execute the method for chat channel display according to any one of claims 1 to 16.

19. A computer-readable storage medium,
wherein the computer-readable storage medium stores computer-executable instructions, and when the computer-executable instructions are executed by a processor, the processor is caused to implement the method for chat channel display according to any one of claims 1 to 16.

20. A computer program product, comprising:
a computer program,
wherein when the computer program is executed by a processor, the processor is caused to implement the method for chat channel display according to any one of claims 1 to 16.

21. A computer program, wherein when the computer program is executed by a processor, the processor is caused to implement the method for chat channel display according to any one of claims 1 to 16.
